## Europäisches Patentamt

## European Patent Office

## Office européen des brevets

(11) Numéro de publication: **0 143 020**
**B1**

## FASCICULE DE BREVET EUROPÉEN

(45) Date de publication du fascicule du brevet:
18.03.87

(21) Numéro de dépôt: 84401869.7

(22) Date de dépôt: 21.09.84

(51) Int. Cl.⁴: **B 01 J 27/04,** C 10 G 45/08

(54) Catalyseurs à base de sulfures de métaux du groupe VIII et du groupe VIB, leur fabrication et leur utilisation dans les réactions d'hydrotraitement des coupes d'hydrocarbures contenant du soufre.

(30) Priorité: 25.10.83 FR 8316944

(43) Date de publication de la demande:
29.05.85 Bulletin 85/22

(45) Mention de la délivrance du brevet:
18.03.87 Bulletin 87/12

(84) Etats contractants désignés:
BE DE GB IT NL

(56) Documents cité:
FR-A-830 135
FR-A-1 482 144
GB-A-1 123 136
US-A-2 394 739
US-A-2 595 772
US-A-3 017 368
US-A-4 243 554

BULLETIN DES SOCIETES CHIMIQUES BELGES, vol. 90, no. 12, 1981, pages 1225-1232, Pergamon Press Ltd., Oxford, GB; R. CANDIA et al.: "On the role of promoter atoms in unsupported hydrodesulfurization catalysts: influence of preparation methods"

(73) Titulaire: INSTITUT FRANCAIS DU PETROLE, 4, Avenue de Bois- Préau, F-92502 Rueil- Malmaison (FR)

(72) Inventeur: Toulhoat, Hervé, 51, Avenue Charles Tellier, F-78800 Houilles (FR)
Inventeur: Paulus, Régis, 19, rue du Tonkin, F-69100 Villeurbanne (FR)
Inventeur: Jacquin, Yves, 36, rue des Fontaines, F-92310 Sèvres (FR)

## Description

L'utilisation de métaux du groupe VIB et de leurs combinaisons aux métaux du groupe VIII comme bases pour la préparation de catalyseurs très actifs dans les réactions d'hydroraffinage est bien connue depuis de nombreuses années. A l'heure actuelle, les catalyseurs les plus actifs connus de l'homme de l'art associent aux métaux précités un support à base d'oxydes réfractaires, par exemple de l'alumine, de la silice, des silice-alumines.

Les catalyseurs supportés d'hydroraffinage sont le plus couramment commercialisés sous forme "oxyde", c'est à dire après avoir subi une calcination à température élevée en présence d'air, de sorte que les métaux actifs s'y trouvent chimiquement liés à de l'oxygène. Cependant, le raffinage à l'hydrogène des coupes hydrocarbonées contenant des impuretés soufrées réalise en particulier l'hydrodésulfuration par l'hydrogène, avec l'hydrogène sulfure comme produit. En conséquence, les formes stables en présence de l'atmosphère réactionnelle aux conditions opératoires des métaux actifs contenus dans les catalyseurs en fonctionnement sont des sulfures. Il est même bien connu de l'homme de l'art que c'est l'association des sulfures des métaux des groupes VIB et VIII qui constitue l'élement actif de ces catalyseurs, à tel point que leur mise en oeuvre industrielle commence toujours par une étape de présulfuration, déterminante pour le niveau d'activité qui s'établit en régime.

La nature cristallochimique précise des sulfures qui se forment sur les catalyseurs supportés n'est pas connue et n'est pas connaissable directement par les méthodes radiocristallographiques ou de microscopie électronique, comme en témoignent par exemple dans la littérature scientifique le Bulletin des Sociétés Chimiques Belges volume 90, numéro 12, 1981 et les Actes du Quatrième Congrès International sur la Chimie et les Applications du Molybdène qui s'est tenu du 8 au 16 août 1982 à Golden, Colorado, USA. En particulier, la présence d'un disulfure d'un métal du groupe VIII n'a jamais pu être observée dans un catalyseur sulfuré supporté d'hydroraffinage.

L'art antérieur connait aussi des catalyseurs non supportés associant des sulfures de métaux du groupe VIB et du groupe VIII. On connait par exemple le catalyseur 3076 de la société I.G. Farben, décrit dans le rapport CIOS, volume XXXII-107, pages 115 à 124, publié en 1945. Ce catalyseur associe le monosulfure de nickel NiS au disulfure du tungstène $WS_2$ dans le rapport molaire 2:1. Les sulfures sont obtenus par traitement entre 420 et 460 °C par un mélange $H_2 + H_2S$ du mélange carbonate de nickel + acide tungstique. Le brevet US 2 394 739 enseigne une méthode de préparation d'un catalyseur d'hydrogénation composé, également d'un mélange de monosulfure de nickel et de disulfure de tungstène, selon laquelle une solution aqueuse de nitrate de nickel est ajoutée à une solution ammoniacale de thiotungstate d'ammonium et de sulfure d'ammonium en excès. Le monosulfure de nickel précipite, puis la solution est acidifiée à pH = 2 et le trisulfure de tungstène précipite. On peut aussi ajouter une solution acide de nitrate de nickel à la solution de thiotungstate. Dans tout les cas, le précipité est réduit sous hydrogène après séchage.

PRATT et coll. ont étudié une série de catalyseurs sulfurés à base de nickel et de molybdène préparée par leurs soins (Journal of Catalysis, vol 66, pages 82 à 92, 1980). Leur méthode de préparation comporte une coprécipitation continue à partir de solutions aqueuses de nitrate de nickel et d'heptamolybdate d'ammonium, en l'absence de soufre. Le précipité séché et calciné sous air 4 heures à 400 °C conduit à un mélange très divisé des oxydes de nickel et de molybdène. Après sulfuration in-situ par 20 % volume d'$H_2S$ dans $H_2$ pendant 4 heures à 400 °C, ces mélanges ont été testés en activité catalytique d'hydrogénolyse du thiophène. Après tests, les catalyseurs ont été caractérisés. L'un des catalyseurs les plus actifs, correspondant au rapport atomique (nickel/nickel+molybdène) égal à 0,73, avait une surface spécifique de 50 $m^2$/g environ, une stoechiométrie globale de un atome de soufre par atome métallique environ et la présence de $MoS_2$, de $NiS_2$ et de NiS a été détectée par diffraction des rayons X dans ce catalyseur.

Le brevet US 4 303 634 décrit la préparation d'un catalyseur non supporté au disulfure de molybdène par décomposition thermique sous atmosphère inerte du sel d'ammonium du sulfure de molybdène obtenu par réaction entre le trioxyde de molybdène et le sulfure d'ammonium. Le brevet US 4 243 554 décrit une méthode analogue pour obtenir un catalyseur analogue, en partant d'un sel de thiomolybdate d'ammonium de composition bien définie. Ces brevets décrivent donc des méthodes de préparation de catalyseurs au molybdène uniquement.

Topsoe et coll. ont décrit dans Journal of Catalysis, 68, 433-452, (1981) et Candia et coll. dans le Bulletin des Sociétés Chimiques Belges, 90, (12), 1225-1252, (1981), une méthode de préparation dite "HSP" pour "Homogeneous Sulfide Precipitation", de catalyseurs non supportés constitués par des sulfures mixtes de cobalt et de molybdène, selon laquelle à une solution à 20% pds de sulfure d'ammonium, donc de pH supérieur à 10, maintenue entre 60 et 80 °C environ sous agitation vigoureuse est ajoutée une solution aqueuse de nitrate de cobalt et d'heptamolybdate d'ammonium de rapport atomique Co/Mo prédéterminé portée la même température. On opère sous air et l'ensemble est maintenu en température sous agitation jusqu'à ce que toute l'eau soit évaporée. Le précipité obtenu, précurseur du catalyseur final, est ensuite porté sous flux de 2 à 6 % volume d'$H_2S$ dans $H_2$ entre 320 et 400 °C pendant 4 heures, pour une sulfuration finale, puis refroidi sous azote et conditionné sous argon. Les catalyseurs préparés par la méthode HSP, caractérisés par Candia et coll. par diffraction des rayons X, se sont révélés constitués d'une seule phase homogène analogue à la molybdènite. Par ailleurs, une variante de la méthode "HSP"; été décrite par Breysse et coll. (184th ACS Natl. Meeting, Div. Pet. Chem., Kansas City, 12-17 sept. 1982). Selon cette variante, c'est une solution diluée de sulfure d'ammonium qui est ajoutée lentement à une solution très diluée d'heptamolybdate d'ammonium et de nitrate de cobalt de rapport Co/Mo prédéterminé. On n'opère pas sous atmosphère inerte. Après évaporation de l'eau, le solide recueilli est resulfuré sous 15 % vol $H_2S$ dans $H_2$ pendant 4 heures à 400 ° C.

On a maintenant découvert un procédé de préparation de catalyseurs solides non supportés de haute activité, souvent plus actifs que les catalyseurs supportés, eux mêmes étant connus comme plus actifs que les catalyseurs non supportés de l'art antérieur, notamment dans les opérations de raffinage à l'hydrogène de coupes d'hydrocarbures contenant entre autres des impuretés soufrées.

Cette méthode particulière de synthèse de catalyseurs non supportés comprenant principalement une association d'au moins un sulfure d'un métal du groupe VIB de la classification périodique des éléments (Handbook of chemistry and physics, 37$^{ième}$ édition, 1955-1956, p. 392-393), et d'au moins un sulfure d'un métal du groupe VIII comprend les étapes suivantes:

a) mise en réaction, à pH maintenu à une valeur de 4,5 à 8 d'une solution aqueuse d'au moins un sel soluble d'au moins un métal du groupe VIII et d'au moins un sel d'ammonium de polyanion d'au moins un métal du groupe VIB avec au moins un agent sulfurant aquosoluble de manière à former un coprécipité de sulfures,

b) séparation du précipité obtenu des eaux-mères,

c) séchage du précipité,

d) calcination du précipité séché,

ces diverses étapes étant effectuées sous atmosphère inerte.

Les proportions des réactifs mis en jeu pendant l'étape (2) sont avantageusement telles que le rapport du nombre d'atomes de métaux du groupe VIII au nombre total d'atomes métalliques soit de 0,35 à 0,95, de préférence de 0,50 à 0,85 et que le rapport du nombre d'atomes de soufre au nombre total d'atomes métalliques soit de 1,2 à 2,1, de préférence proche de 2, par exemple de 1,70 à 2,05.

Une classe préférée de catalyseurs qui peuvent être obtenus en particulier selon la méthode décrite ci-dessus est constituée par les catalyseurs comprenant l'association d'au moins un sulfure d'un métal du groupe VIB à au moins un sulfure d'un métal du groupe VIII, ces sulfures ayant une stoechiométrie de 1,2 à 2,2 atomes de soufre par atome de métal, et de préférence une stoechiométrie proche de 2, par exemple de 1,70 à 2,05, un rapport du nombre d'atomes de métaux du groupe VIII au nombre total d'atomes métalliques de 0,35 à 0,95, et la structure cristallographique de la molybdénite pour le ou les sulfures de métal du groupe VIB et celle de la pyrite pour le ou les sulfures de métal du groupe VIII, la dite association présentant un diagramme de diffraction sur poudre du rayonnement X à la longueur d'onde de la raie $K_{alpha}$ du cuivre comportant au moins les deux raies principales et de préférence les quatres raies principales caractéristiques du ou des disulfures de métaux du groupe VIB, le sommet de la raie notée (002) en indices de MILLER étant située à un angle de BRAGG de 7,0 à 7,30 degrés et sa largeur angulaire à mi-hauteur étant de 0,5 à 1,5 degrés, comportant également au moins les deux raies principales et de préférence les sept raies principales du disulfure de chacun des métaux du groupe VIII mis en jeu, la largeur angulaire à mi-hauteur de la raie la plus intense notée (200) en indices de MILLER du disulfure de métal du groupe VIII majoritaire étant de 0,05 à 1 degré, l'intensité diffractée au sommet de cette raie étant supérieure à celle diffractée au sommet de la raie (002) du disulfure majoritaire de métal du groupe VIB, ce diagramme de diffraction étant tel que, si les raies caractéristiques d'un monosulfure de métal du groupe VIII se manifestent, la hauteur de la raie principale (100) est inférieure à 5 fois celle de la raie principale (200) du disulfure du même métal, et tel que, si les raies caractéristiques du dioxyde du métal du groupe VIB majoritaire se manifestent, la hauteur de la raie principale (110) de ce dioxyde soit inférieure à 0,5 fois celle de la raie principale (002) du disulfure du même métal.

Ces catalyseurs peuvent être mis en forme tels quels ou associés, de façon mécanique par exemple, à un liant argileux, à un porogène, ou encore à un oxyde réfractaire tel que par exemple l'alumine, la silice ou une silice-alumine. L'invention concerne également l'utilisation de ces catalyseurs dans les diverses réactions des opérations de raffinage à l'hydrogène des coupes d'hydrocarbures contenant entres autres des impuretés soufrées: hydrodésulfuration, hydrodésazotation, hydrodémétallation, hydrogénations, hydrodécyclisation, hydrocraquage.

Le métal du groupe VIII est plus particulièrement le nickel, le cobalt ou le fer, et le métal du groupe VIB est plus particulièrement le molybdène ou le tungstène. On met en jeu avantageusement le couple nickel-molybdène, ou le couple cobalt-molybdène, ou le couple nickel-tungstène, ou encore l'association cobalt-nickel-molybdène. On préfère les associations mettant en jeu du nickel.

L'agent sulfurant peut être plus particulièrement du sulfure d'ammonium, ou encore un polysulfure d'ammonium ou d'hydrogène aquosoluble. C'est le plus souvent du sulfure d'ammonium.

On décrit ci-après plus en détail les conditions préférées des étapes de la méthode de préparation selon l'invention.

Pour effectuer la précipitation des sulfures, on prépare une enceinte réactionnelle étanche contenant de l'eau distillée désaérée sous agitation magnétique, on la purge par un courant de gaz inerte pour éliminer l'oxygène moléculaire libre, et on maintient par la suite le courant de gaz de purge, qui doit saturer le liquide réactionnel et le ciel gazeux de l'enceinte. Le gaz inerte peut être, à l'exclusion de l'oxygène pur ou dilué par un autre gaz, tout autre gaz et par exemple l'azote, le gaz carbonique ou un gaz rare tel que par exemple l'hélium ou l'argon. On utilise de préférence l'argon. L'enceinte est munie d'une électrode de verre combinée à double jonction permettant de mesurer en permanence le pH du liquide réactionnel à 0,01 unités près. Le milieu est maintenu à une température de 0 à 50 °C, et de préférence à la température ambiante.

On fait arriver séparément dans l'enceinte les réactifs, sous forme d'une solution aqueuse contenant au moins 15 % en poids de sulfure d'ammonium, d'une solution aqueuse d'un sel d'ammonium d'un polyanion du métal du groupe VIB, et d'une solution aqueuse de nitrate de l'anion divalent du métal du groupe VIII. Les débits volumiques des solutions des réactifs sont maintenus constants et sensiblement égaux entre eux. Les concentrations des solutions des métaux des groupes VIB et VIII sont ajustées pour que le rapport du débit atomique du ou des métaux du groupe VIII au débit atomique total des métaux introduits dans l'enceinte soit égal au rapport atomique des métaux du groupe VIII à la somme des métaux souhaitée pour le catalyseur final que l'on veut préparer. Pendant toute la durée de l'opération, le pH est maintenu à une valeur de consigne telle qu'elle a été mentionnée plus haut, à plus ou moins 0,5 unités près, par exemple par additions contrôlées séparées de solutions aqueuses d'acide nitrique ou phosphorique et de sulfure d'ammonium. Cette opération peut être réalisée manuellement ou automatiquement.

Dès le début de l'introduction simultanée des réactifs dans l'enceinte, le liquide réactionnel devient noir du fait de la précipitation de sulfures métalliques finement divisés. Le précipité peut être séparé des eaux-mères par filtration ou centrifugation, soit en cours d'introduction des réactifs, soit quand celle-ci est terminée. Toutefois, de manière préférée, on réalisera la séparation en cours d'addition des réactifs, par centrifugation en continu du liquide réactionnel et en recyclant les eaux-mères dans l'enceinte réactionnelle. L'accélération centrifuge est alors fixée entre 5400 et 19600 m.s$^{-2}$, de préférence entre 5800 et 9800 m.s$^{-2}$

Le précipité recueilli à l'issue de l'étape (b) de séparation est de manière préférée mis en forme, par tout procédé connu de l'homme de l'art, tel que l'extrusion, le pastillage, la granulation, la coalescence en gouttes. De manière préférée, on utilise l'extrusion.

On peut à cette étape de la préparation incorporer au précipité un gel d'alumine, de silice ou de silice-alumine, un liant connu de l'homme de l'art, tel que la bentonite, des porogènes, ou toute autre substance susceptible de conférer au catalyseur fini des propriétés mécaniques et/ou texturales spécifiques. La substance incorporée et le précipité sont comalaxés jusqu'à obtention d'une pâte homogène, à laquelle on fait subir la mise en forme par la méthode la plus adaptée. La substance incorporée peut représenter de 5 à 95%, de préférence de 20 à 60 %, en poids du catalyseur fini.

A la fin de l'étape de mise en forme, le catalyseur humide est introduit dans un four balayé par un courant de gaz inerte, de préférence le même que celui qui a été utilisé à l'étape de coprécipitation. On fixe le débit spécifique dé gaz inerte entre 100 et 10000 litres par litre de précipité et par heure (TPN).

Le catalyseur est soumis dans le four à une étape de séchage sous gaz inerte à une température comprise entre 100 et 150 °C jusqu'à ce que l'humidité relative du gaz de balayage dans la zone chaude du four devienne inférieure à 5%. La température du four est alors augmentée jusqu'à une valeur comprise entre 300 et 600 ° C, de préférence 390 à 450 ° C, pendant 1 à 6 heures, de préférence 2 à 5 heures. Cette calcination sous gaz inerte constitue l'étape finale de préparation du catalyseur, qui est ensuite, de manière préférée, ramené à température ambiante sous gaz inerte et conditionné dans un récipient étanche sous gaz inerte.

Le catalyseur ainsi préparé peut être transféré dans le réacteur catalytique d'utilisation sans prendre de précautions particulières, mais de préférence le transfert s'opère à l'abri de l'air atmosphérique.

Les catalyseurs préférés qui peuvent être obtenus selon le procédé décrit ci-dessus, ont les caractéristiques physico-chimiques suivantes, mesurées dans le cas où l'on n'ajoute aucune substance lors de la mise en forme:
- Le rapport du nombre d'atomes de métaux du groupe VIII au nombre total d'atomes métalliques est de 0,35 à 0,95, et de préférence de 0,5 à 0,85.
- Le rapport du nombre d'atomes de soufre au nombre total d'atomes métalliques est de 1,2 à 2,2, de préférence proche de 2, par exemple de 1,70 à 2,05.
- La surface spécifique mesurée par sorptométrie à l'azote est de 10 à 200 m$^2$/g, et de préférence de 40 à 60 m$^2$/g.
- De plus certains de ces catalyseurs présentent un diagramme de diffraction sur poudre du rayonnement X à la longueur d'onde de la raie K$_{alpha}$ du cuivre (0,15405 nanomètres) qui comporte entre 1 et 32 degrés de BRAGG les raies caractéristiques, au moins les deux principales et parfois les quatre principales, du ou des disulfures de métaux du groupe VIB telles que par exemple référencées sur la fiche 24-513A du J.C.P.D.S. ou "Joint Comittée on Powder Diffraction Standards, International Centre for Diffraction Data " (1601 Park Lane, Swarthmore, Philadelphia, U.S.A.) pour la molybdènite, la fiche J.C.P.D.S. 8-237 pour la tungstènite et reprises ci-dessous dans le tableau 1. Le maximum d'intensité diffractée pour la raie principale (002) est situé à un angle de BRAGG de 7.0 à 7,30 degrés d'arc et la largeur angulaire à mi-hauteur de cette raie est de 0,5 à 1,5 degrés sur la même échelle. Le diagramme comporte également les raies caractéristiques, au moins les deux raies principales et souvent les sept raies principales du disulfure de chacun des métaux du groupe VIII introduits dans la préparation, qui cristallisent dans le système de la pyrite, telles que par exemple référencées dans les fiches JCPDS 11-99 pour la vaesite ou disulfure de nickel, JCPDS 3-0772 pour la cattiérite ou disulfure de cobalt, et JCPDS 6-0710 pour la pyrite ou disulfure de fer et reprises dans le tableau 1. La largeur angulaire à mi-hauteur de la raie principale (200) du disulfure de métal du groupe VIII majoritaire est de 0,05 à 1 degré en angles de BRAGG, et de préférence de 0,15 à 0,25 degré. L'intensité diffractée au maximum de cette raie est supérieure à celle diffractée au maximum de la raie principale (002) du disulfure du métal du groupe VIB majoritaire, et de préférence de 1 à 3 fois. La présence de monosulfures de métaux du groupe VIII peut également se manifester dans le diagramme, mais la hauteur de la raie principale (100) du monosulfure du métal du groupe VIII majoritaire doit être inférieure à 5 fois, de préférence inférieure à 1 fois, celle de la raie principale du disulfure du même métal du groupe VIII. La hauteur de la raie principale (110) du dioxyde du métal du groupe VIB

majoritaire doit être inférieure à 0,5 fois celle de la raie principale (002) du disulfure du même métal, et de

4

préférence nulle. L'intensité diffractée au maximum d'une raie (ou hauteur de cette raie) est définie comme étant l'intensité recueillie à cet angle de BRAGG dans les conditions d'analyse, moins l'intensité moyenne recueillie entre les angles de BRAGG 9 et 12 degrés dans les mêmes conditions.

Les catalyseurs obtenus par la méthode décrite ci-dessus sont actifs pour toutes les réactions possibles entre l'hydrogène et un mélange d'hydrocarbures contenant des composés du soufre, et en particulier les réactions d'hydrogénation, d'hydrodésulfuration, d'hydrodésazotation, d'hydrodémétallation, d'hydrodécyclisation, d'hydrogénolyse et d'hydrocraquage.

Indices de MILLER des raies principales des disulfures de métaux des groupes VIB et VIII dans l'ordre de leur apparition pour un angle de BRAGG croissant entre 1 et 32 degrés, et pour la radiation $K_{alpha}$ du cuivre.

```
------------------------------------------------------------------------

! MoS2 ! (002) (103) (101) (110)                            !

! WS2  ! (002) (103) (101) (100)                            !

! NiS2 ! (111) (200) (210) (211) (220) (311) (321) !

! CoS2 ! (200) (210) (211) (220) (311) (231) (333) !

! FeS2 ! (111) (200) (210) (211) (220) (311) (321) !

------------------------------------------------------------------------
```

TABLEAU 1

Les exemples ci-après illustrent l'invention sans d'aucune manière en limiter la portée.

Exemple 1

On prépare une enceinte réactionnelle étanche comprenant un ballon de verre à fond sphérique de 5 litres, muni d'un couvercle à 5 passages à joint torique téfloné, et engagé dans un combiné chauffe-ballon agitateur magnétique de marque ELECTROTHERMAL type ROTAMANTLE. L'enceinte est reliée à un circuit d'alimentation en argon (argon U de la société l'Air Liquide) et à un circuit d'évacuation à l'évent muni d'un barboteur, d'une fiole de garde et d'un flacon laveur contenant une solution aqueuse d'hydroxyde de sodium technique. Le couvercle du ballon est muni de 5 tubes capillaires de verre à extrémité épointée pour introductions séparées goutte à goutte de solutions de réactifs. Une des pointes est reliée à un réservoir de solution aqueuse de nitrate de nickel à 6 molécules d'eau (R.P. NORMA-PUR de PROLABO), une autre à un réservoir de solution aqueuse d'heptamolybdate d'ammonium à 4 molécules d'eau (R.P. NORMAPUR de PROLABO), et une troisième à un réservoir de solution aqueuse de sulfure d'ammonium à 20 % poids environ (RECTAPUR de PROLABO). Les circuits d'alimentation des ces solutions sont réalisés en tuyaux souples et comprennent une pompe péristaltique commune à trois têtes parallèles de marque MASTERFLEX. Cette disposition permet d'introduire les trois solutions dans l'enceinte réactionnelle de façon simultanée et rigoureusement au même débit volumique. La quatrième et la cinquième pointe sont reliées respectivement à un réservoir d'acide nitrique concentré (R.P. NORMAPUR de PROLABO) et à une dérivation en amont de la pompe MASTERFLEX sur le circuit de solution de sulfure d'ammonium, par l'intermédiaire de tuyaux souples en VITON engagés dans les stators de pompes péristaltiques à moteur pas à pas type MPRE de la société TACUSSEL. On équipe également l'enceinte réactionnelle d'une électrode de mesure du pH combinée à double jonction de marque INGOLD type 465, connectée à un pH-mètre régulateur URECTRON 6 TACUSSEL, commandant la vitesse de rotation des pompes MPRE. L'ensemble constitué par l'électrode, l'URECTRON 6, et les pompes MPRE commandant l'introduction dans l'enceinte de quantités controlées des réactifs antagonistes respectivement acide et basique que sont l'acide nitrique et le sulfure d'ammonium permet de maintenir le pH du milieu réactionnel à la valeur que l'on souhaite. On dispose encore dans le ballon un tube de soutirage, dont l'extrémité est proche du fond du ballon, et un tube de recyclage des eaux-mères. Le tube de soutirage est relié par un tube translucide en élastomère à l'amont d'une pompe péristaltique MASTERFLEX alimentant en amont une centrifugeuse SORVALL SS-3 automatique équipée d'un rotor de centrifugation en continu SORVALL type SZENT-GYORGYI et BLUM. La sortie aval de la centrifugeuse est reliée au tube de recyclage. Un barreau magnétique téfloné de taille convenable et de forme adaptée à la courbure du fond du ballon, entraîné par l'agitateur ROTAMANTLE, permet de maintenir le liquide réactionnel sous agitation modérée.

On remplit les réservoirs prévus à cet effet d'une solution de 75,95 g de nitrate de nickel hexahydraté dans 280 cm³ d'eau distillée, d'une solution de 19,76 g d'heptamolybdate d'ammonium à 4 molécules d'eau dans 280 cm³ d'eau distillée, de 300 cm³ de solution de sulfure d'ammonium et de 200 cm³ d'acide nitrique concentré.

On étalonne l'électrode INGOLD à l'aide de solutions de référence de pH bien déterminé. On introduit 1400 cm³ d'eau distillée désaérée dans le ballon réactionnel, on ferme l'enceinte étanche et on la purge 30 minutes par un courant d'argon à un débit de 30 litres/heure. Puis on reduit ce débit à 5 litres/heure environ.

On met en action le système de régulation du pH en fixant la valeur de consigne à 5, à 0,5 unités près.

On met en action la centrifugeuse, en augmentant progressivement sa vitesse de rotation jusqu'à ce qu'elle atteigne la valeur de 14000 tours par minute environ. On peut alors mettre en route la pompe de soutirage alimentant la centrifugeuse, à débit modéré, jusqu'à ce que l'eau distillée soutirée et circulant dans la

# 0 143 020

centrifugeuse revienne au ballon. On attend l'établissement d'un débit de soutirage et recyclage permanent et constant et la stabilisation du pH à sa valeur de consigne.

On met en action la pompe d'introduction des réactifs, en fixant son débit à 100 cm³/heure environ, et on poursuit l'introduction des réactifs jusqu'à épuisement de la totalité des sels métalliques. On ajoute ensuite 200 cm³ d'eau distillée dans chacun des réservoirs de solutions de sels métalliques et on procède à un rinçage des circuits jusqu'à épuisement de l'eau distillée. On arrête à ce moment l'introduction des réactifs.

Dès l'introduction des réactifs dans l'enceinte, le milieu réactionnel passe au brun sombre puis au noir opaque, ce qui indique que la coprécipitation est effective. Lorsque les phases d'introduction des réactifs et de rinçage sont terminées, on surveille l'opacité du circuit de soutirage amont. Lorsque le liquide soutiré devient translucide, la phase de coprécipitation est terminée.

Le précipité humide est extrait de la centrifugeuse et disposé dans une nacelle de quartz, que l'on introduit dans un four tubulaire horizontal. Le tube laboratoire du four tubulaire est purgé par un courant d'argon qui sera maintenu aux étapes suivantes de séchage et calcination. La température du four est portée à 110 °C et maintenue à cette valeur pendant deux heures. A l'issue de cette étape de séchage, la température du four est portée à 400 °C et maintenue à cette valeur pendant deux heures. A l'issue de cette étape de calcination, on laisse refroidir le four sous courant d'argon, puis on isole le tube laboratoire sous argon. Le tube laboratoire est ouvert dans une boite à gants préalablement purgée à l'argon et remplie d'argon, et le catalyseur calciné est broyé au mortier d'agate, puis conditionné en flacon hermétique dans cette boite à gants.

On obtient ainsi 43 g de catalyseur A selon l'invention.

On procède de la même façon mais à partir d'une solution de 51,40 g de nitrate de nickel hexahydrate dans 265 cm³ d'eau distillée et d'une solution de 31,20 g d'heptamolybdate d'ammonium à 4 molécules d'eau dans la même quantité d'eau distillée pour obtenir 44 g de catalyseur B préparé selon la méthode de l'invention mais n'ayant pas toutes les caractéristiques des catalyseurs préférés selon l'invention, et particulier le diagramme de diffraction n'obéit pas à l'ensemble des conditions indiquées ci-dessus pour les catalyseurs préférés de l'invention.

On procède de la même facon mais à partir d'une solution de 89,25 g de nitrate de nickel hexahydrate dans 250 cm³ d'eau distillée et d'une solution de 13,54 g d'heptamolybdate d'ammonium à 4 molécules d'eau dans la même quantité d'eau distillée pour obtenir 40 g environ de catalyseur C selon l'invention.

On procède de la même façon mais à partir d'une solution d'une solution de 55,14 g d'heptamolybdate d'ammonium à 4 molécules d'eau dans 240 cm³ d'eau distillée et sans ajout de solution de sel de nickel pour obtenir 40 g environ de catalyseur D (comparaison).

On procède de la même façon mais à partir d'une solution de 118,38 g de nitrate de nickel hexahydrate dans 300 cm³ d'eau distillée et sans ajout de solution de sel de molybdène, pour obtenir 35 g environ de catalyseur E (comparaison).

On procède de la même façon mais à partir d'une solution de 29,3 g de nitrate de nickel hexahydrate dans 250 cm³ d'eau distillée et d'une solution de 41,49 g d'heptamolybdate d'ammonium à 4 molécules d'eau dans la même quantité d'eau distillée pour obtenir 38 g environ de catalyseur F (comparaison).

On procède de la même façon mais à partir d'une solution de 39,27 g de nitrate de nickel hexahydrate dans 250 cm³ d'eau distillée et d'une solution de 36,83 g d'heptamolybdate d'ammonium à 4 molécules d'eau dans la même quantité d'eau distillée pour obtenir 45 g environ de catalyseur M selon l'invention.

On procède de la même façon mais à partir d'une solution de 47,79 g de nitrate de nickel hexahydrate dans 250 cm³ d'eau distillée et d'une solution de 32,86 g d'heptamolybdate d'ammonium à 4 molécules d'eau dans la même quantité d'eau distillée pour obtenir 43 g environ de catalyseur N selon l'invention.

Le tableau 3 rassemble les analyses élémentaires effectuées sur les catalyseurs A à F et M et N, par la technique de fluorescence X pour le nickel et le molybdène, et par combustion pour le soufre. Il permet de constater que le rapport du nombre d'atomes de soufre au nombre total d'atomes métalliques est compris entre 1,4 et 2,2 pour toutes les préparations selon l'invention. Le tableau 3 rassemble également les valeurs des surfaces spécifiques mesurées sur ces catalyseurs par sorptométrie à l'azote au moyen d'un appareil SORPTOMATIC de la société CARLO ERBA.

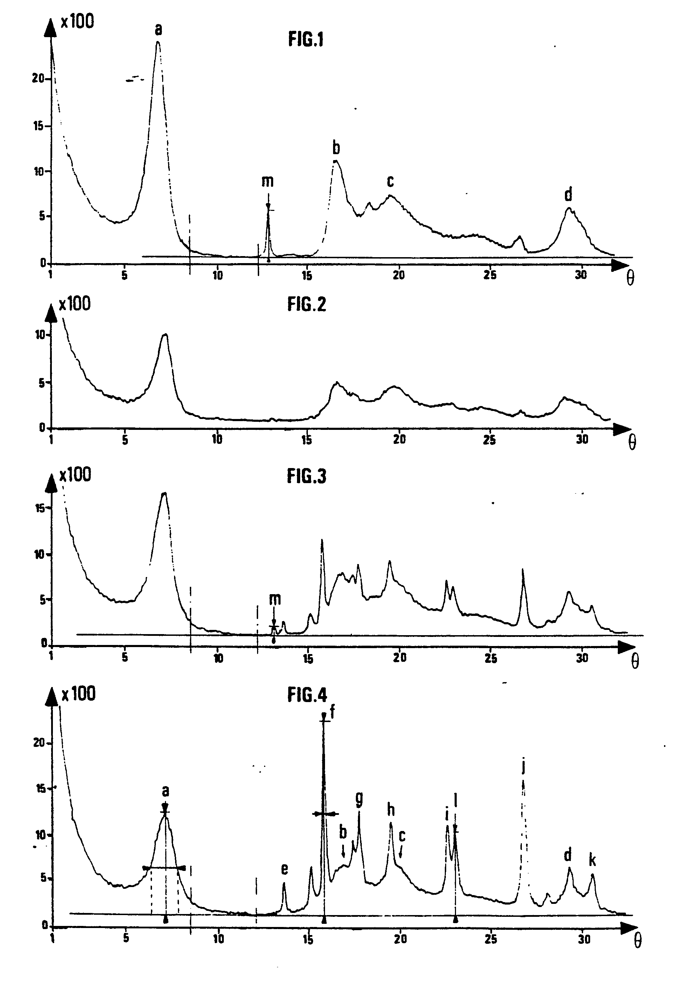

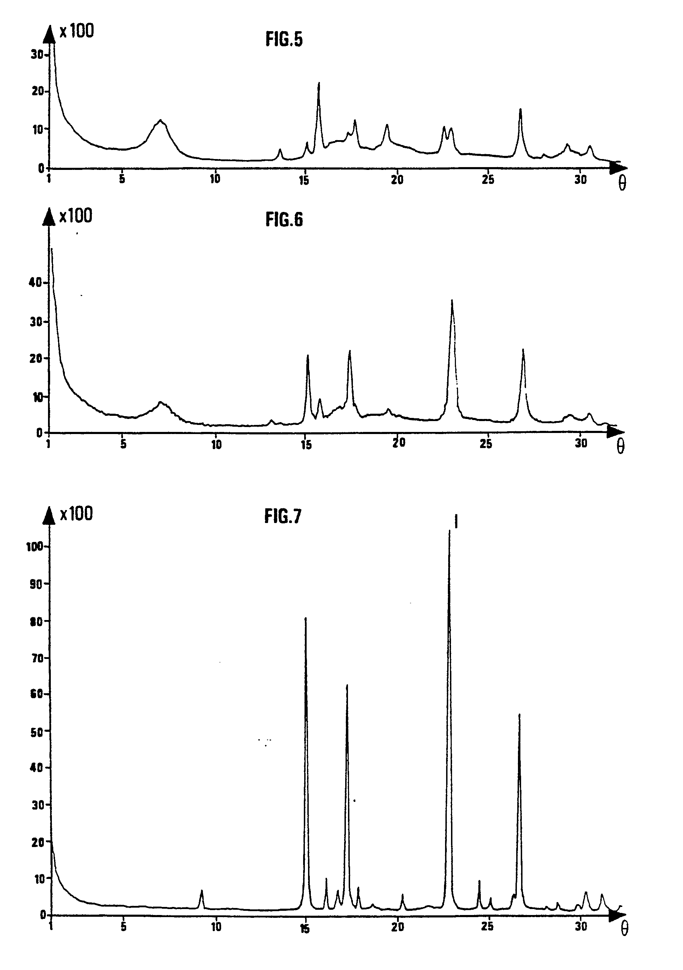

Les figures 1 à 7 rassemblent les diagrammes de diffraction des rayons X obtenus pour les catalyseurs A à F, en utilisant le rayonnement émis par un tube à anticathode de cuivre et filtré à la longueur d'onde de la raie $K_{alpha}$ de ce métal (0,15405 nanomètres) sur un goniomètre de marque PHILIPS modèle PW1050 muni d'un monochromateur arrière. Le signal a été enregistré par une chaîne de comptage alimentée par le détecteur; échantillon et détecteur avancent pas à pas. On a choisi un temps de comptage de 5 secondes par pas, le pas étant fixé à 2,5 centièmes de degré théta de BRAGG. Cette méthode est par exemple décrite dans "Méthodes Physiques d'Etude des Minéraux et Matériaux Solides" par J.P. EBERHART, pages 195 et suivantes, aux éditions DOIN, Paris, 1976.

Sur les figures 1 à 7, l'échelle des abscisses est graduée en angles de BRAGG, et les ordonnées sont en unité arbitraire d'intensité de rayonnement diffracté. Pour pouvoir mieux comparer les diagrammes des divers catalyseurs, à teneur en nickel variable, on a représenté sur les figures 1 à 4 et 10 et 11 respectivement les diagrammes des catalyseurs D, F, B, A, M, et N à la même échelle, et sur les ffigures 5 à 7 respectivement les diagrammes des catalyseurs A, C et E à une même échelle, différente de la précédente. On peut constater sur ces figures que seuls les catalyseurs A, C, M et N ont un diagramme de diffraction correspondant à la définition particulière des catalyseurs de l'invention. Ceci est encore manifeste à l'examen du tableau 4, qui regroupe pour les catalyseurs A à F et M et N les valeurs de l'angle de BRAGG u au sommet de la raie (002) de

6

la molybdénite, de la largeur angulaire v à mi-hauteur de cette raie, du rapport w de la hauteur de la raie principale (200) de la vaesite ou disulfure de nickel à celle de cette raie, du rapport x de la hauteur de la raie principale (110) du dioxyde de molybdène à celle de cette raie, la largeur angulaire y à mi-hauteur de la raie principale de la vaêsite et l'inverse z du rapport de la hauteur de cette dernière raie à celle de la raie principale (100) du monosulfure de nickel ou millérite.

Les raies des divers composés susceptibles d'être présents dans les catalyseurs sont repérés par les indices a à m. La correspondance est donnée dans le tableau 2 ci-après.

| Raies | a | b | c | d | e | f | g | h | i | j | k | l | m |
|-------|-----|-----|-----|-----|-----|-----|-----|-----|-----|-----|-----|-----|-----|
| $MoS_2$ | 002 | 101 | 103 | 110 | | | | | | | | | |
| $MoO_2$ | | | | | | | | | | | | | 110 |
| $NiS_2$ | | | | | 111 | 200 | 210 | 211 | 220 | 311 | 321 | | |
| NiS | | | | | | | | | | | | | 100 |

TABLEAU 2

Les catalyseurs A à F et M et N sont soumis à un test catalytique d'hydroraffinage et à un autre test catalytique d'hydrodésulfuration du dibenzothiophène, et leur activité est comparée à celles obtenues dans ces mêmes tests pour deux catalyseurs supportés d'hydroraffinage commercialisés par la société PROCATALYSE, le HR 306 à base de cobalt et de molybdène et le HR 346 à base de nickel et de molybdène, tous deux supportés sur alumine gamma. Les conditions de ces tests catalytiques sont définies au tableau 5. Le test d'hydroraffinage permet de mesurer un taux d'hydrogénation du toluène X, un taux d'isomérisation du cyclohexane I, et un taux d'hydrodécyclisation du toluène H, avec:

t: Concentration en toluène dans l'effluent

cC6: Concentration en cyclohexane dans l'effluent

mcC5: Concentration en méthyl-cyclopentane dans l'effluent.

ecC5: Concentration en éthyl-cyclopentane dans l'effluent.

S2mcC5: Somme des concentrations des diméthyl-cyclopentanes dans l'effluent.

mcC6: Concentration en méthyl-cyclohexane dans l'effluent.

et $X = 100(mcC6 + ecC5 + S2mcC5)/(t + mcC6 + ecC5 + s2mcC5)$

$I = 100(mcC5)/(mcC5 + cC6)$

$H = 100(S2mcC5 + ecC5)/(mcC6 + ecC5 + S2mcC5)$

Le test d'hydrodésulfuration permet de mesurer la vitesse V d'hydrodésulfuration du dibenzothiophène exprimée en moles transformées par seconde et par gramme de catalyseur.

Le tableau 6 rassemble les résultats des tests d'hydroraffinage et d'hydrodésulfuration. Il met bien en évidence les activités d'hydroraffinage supérieures des catalyseurs de l'invention A, C, M et N comparées aux catalyseurs de l'art antérieur HR 306 et HR 346 d'une part, et comparées d'autre part à des catalyseurs tels que D, E, et F, qui n'ont ni une composition ni un diagramme de diffraction correspondant aux définitions des catalyseurs de l'invention. Le catalyseur B, préparé suivant la méthode de l'invention mais dont le diagramme de diffraction ne correspond pas à celui des catalyseurs préférés de l'invention est moins efficace en hydroraffinage que les catalyseurs A, C, M, et N. Il est toutefois plus actif en hydroraffinage que les catalyseurs de l'art antérieur. En ce qui concerne les activités en hydrodésulfuration, les catalyseurs A, C, M et N de l'invention sont équivalents, voire légèrement plus actifs que les catalyseurs de l'art antéricur. Les catalyseurs D à F qui n'ont ni une composition ni un diagramme de diffraction correspondant aux définitions de l'invention, sont nettement moins actifs.

| Catalyseur | Ni %pds | Mo %pds | S %pds | Ni/Ni+Mo atom. | S/Ni+Mo atom. | s m²/g |
|---|---|---|---|---|---|---|
| A | 31 | 20,2 | 34,2 | 0,715 | 1,447 | 43 |
| B | 20,5 | 32,7 | 39,5 | 0,5062 | 1,789 | 38 |
| C | 43 | 14 | 37,1 | 0,834 | 1,662 | 40 |
| D | 0 | 61 | 36,3 | 0,0 | 1,780 | 78 |
| E | 64 | 0 | 33,7 | 1,0 | 0,966 | 12 |
| F | 12,2 | 42 | 38,6 | 0,322 | 1,869 | 56 |
| M | 14 | 35,4 | 42,7 | 0,393 | 2,197 | 69 |
| N | 16,6 | 30,7 | 40,5 | 0,469 | 2,10 | 51 |

TABLEAU 3

| Catalyseur | u # | v # | w | x | y | z |
|---|---|---|---|---|---|---|
| A | 7,00 | 1,35 | 1,92 | 0,00 | 0,20 | 0,41 |
| B | 7,05 | 1,30 | 0,68 | 0,05 | 0,20 | 0,48 |
| C | 7,10 | 1,50 | 1,19 | 0,32 | 0,25 | 4,62 |
| D | 6,90 | 1,05 | 0,00 | 0,20 | 0,00 | 0,00 |
| E | 0,00 | 0,00 | a | a | 0,00 | b |
| F | 7,20 | 1,10 | 0,00 | 0,03 | 0,00 | a |
| L | 7,05 | 0,75 | 0,53 | 25,4 | a | 0,55 |
| M | 7,15 | 1,40 | 1,49 | 0,00 | 0,18 | 0,14 |
| N | 7,15 | 1,50 | 1,34 | 0,00 | 0,20 | 0,11 |

* : Degrés sur l'échelle des angles de BRAGG pour la diffraction du rayonnement $K_{alpha}$ du cuivre.

a : Indéterminé.

b : Infini.

TABLEAU 4

```
------------------------------------------
! TEST D'HYDRORAFFINAGE              !
! Présulfuration :                   !
! (Seulement pour les catalyseurs    !
! supportés)                         !
! Charge : Toluène      20 % pds     !
!          Cyclohexane 78 % pds      !
!          DMDS         2 % pds      !
! Conditions :  6 MPa                !
!               V.V.H. = 2           !
!               H2/HC = 450 Nl/l     !
!    Injection à 200°C               !
!    2 heures à 280 °C               !
!        "       320     "           !
!        "       350     "           !
! Test :                             !
! Identique , mais charge à 2 % pds  !
! de thiophène au lieu de DMDS et 6  !
! heures à 350 °C et V.V.H.=6 .      !
! Analyse de l'effluent par chroma-  !
! tographique en phase vapeur tou-   !
! tes. les 30 mn .                   !
!-----------------------------------!
!TEST D'HYDRODESULFURATION           !
! Température : 257°C                 !
! Charge : H2 + 0,0164 %vol DBT       !
! Pression totale : 2,4 MPa          !
! Durée : 15 heures                  !
!                                    !
! DMDS : Diméthyl-disulfure          !
! DBT  : Dibenzothiophène            !
------------------------------------------
```

TABLEAU 5

| Catalyseur | X | I | H | V $110^8$ fois |
|---|---|---|---|---|
| A | 73,0 | 1,10 | 24,8 | 48 |
| B | 56,0 | 1,83 | 30,4 | 33 |
| C | 64,5 | 1,12 | 27,7 | 43 |
| D | 1,5 | 0,15 | 57,6 | 9,3 |
| E | 0,1 | 0,01 | 0,5 | 1,7 |
| F | 37,3 | 0,40 | 15,5 | 25 |
| M | 78,8 | 2,23 | 28 | 57 |
| N | 84,5 | 2,7 | 31 | 65 |
| HR 306 | 16,1 | 0,20 | 5,8 | 50 |
| HR 346 | 29,5 | 0,40 | 13,0 | 45 |
| G | 75,3 | 1,2 | 26,0 | 51 |
| H | 70,0 | 1,05 | 24,5 | 44 |
| I | 52,8 | 0,40 | 19,5 | 17,5 |
| J | 65,6 | 0,90 | 23,0 | 39 |
| K | 10,0 | 0,10 | 6,0 | 4,4 |
| L | 12,0 | 0,17 | 6,5 | 5 |

TABLEAU 6

Exemple 2

En procédant comme pour le catalyseur A, on prépare comme indiqué à l'exemple 1 les catalyseurs G, H I, J, et K, mais en régulant le pH de coprécipitation 4,5 pour G, 8 pour H,4 pour I, 9 pour J, et sans réguler le pH pour K.

Les activités des catalyseurs G à K dans les tests catalytiques d'hydroraffinage et d'hydrodésulfuration sont indiquées également au tableau 6, et elles peuvent être comparées à celles obtenues pour le catalyseur A selon l'invention pour la préparation duquel le pH a été régulé à la valeur 5. On peut constater que la méthode de préparation telle que revendiquée ne conduit à des catalyseurs ayant une bonne activité que lorsque le pH est maintenu à une valeur comprise entre 4,5 et 8 au cours de la coprécipitation. Le maintient du pH dans les limites définies pour la méthode de préparation selon l'invention est particulièrement important pour obtenir des catalyseurs d'activité en hydrodésulfuration supérieure ou comparable à celle des catalyseurs de l'art antérieur.

EXEMPLE 3

On prépare le catalyseur L en procédant comme pour le catalyseur A de l'exemple 1, mais en effectuant la coprécipitation en présence d'air.

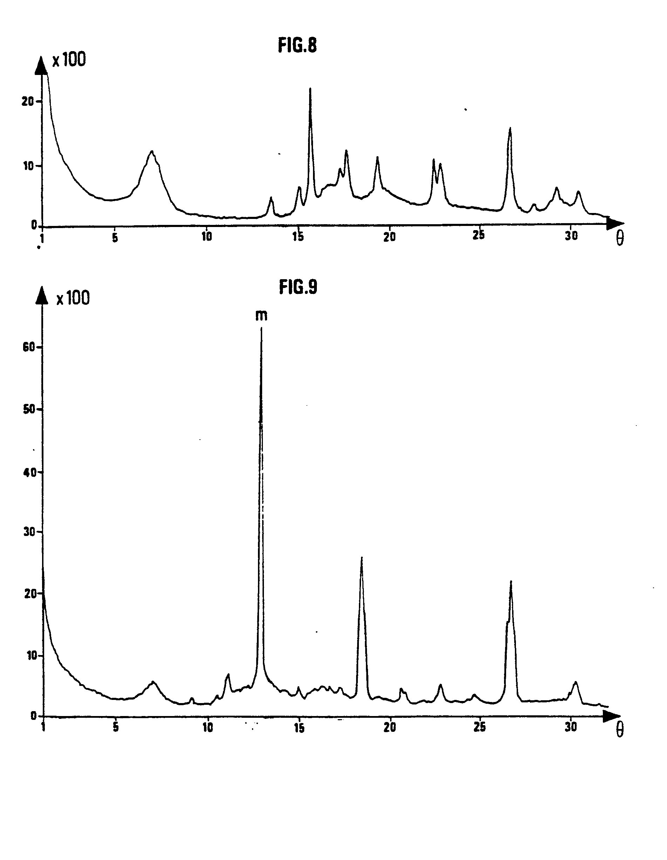

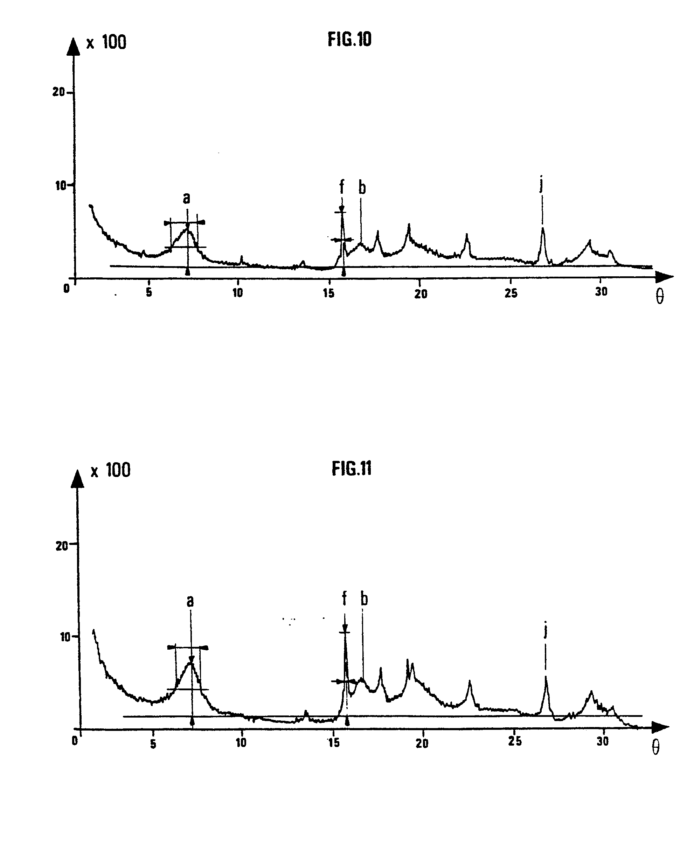

Le diagramme de diffraction des rayons X du catalyseur L est également reporté sur la figure 9, (où il peut être comparé au diagramme correspondant au catalyseur A reproduit à la même échelle: figure 8) et les caractéristiques de ce diagramme sont indiquées dans le tableau 4. Ce catalyseur est riche en dioxyde de molybdène puisque la hauteur de la raie principale de ce composé est supérieure à 10 fois celle de la raie (002) de la molybdènite. Les activités du catalyseur L mesurées dans les tests d'hydroraffinage et

11

d'hydrodésulfuration sont indiquées au tableau 6. Elle sont très faibles comparées à celles obtenues pour le catalyseur A.

Cet exemple illustre donc la nécessité d'opérer la coprécipitation sous balayage de gaz inerte. Par ailleurs, si l'on calcine en présence d'un gaz réducteur ou oxydant, les sulfures métalliques ne sont pas stables.

EXEMPLE 4

On prépare les catalyseurs A1 à A8 en procédant comme indiqué à l'exemple 1 pour le catalyseur A, mais à partir de solutions de sels métalliques décrites au tableau 7. Leurs activités dans les tests d'hydroraffinage et d'hydrodésulfuration sont comparées à celle du catalyseur A et des catalyseurs HR 306 et 346 selon l'art antérieur au tableau 8. Cet exemple montre que des catalyseurs préparés selon la méthode de l'invention à base de différentes combinaisons d'au moins un sulfure de cobalt, de fer, et/ou de nickel, avec au moins un sulfure de molybdène et/ou tungstène présentent également un progrès par rapport aux catalyseurs supportés de l'art antérieur pour ce qui est de l'activité en hydroraffinage. Cependant, le catalyseur A2 associant le nickel et le cobalt au molybdène est le plus actif.

| CATALYSEUR | Quantité de sel métallique utilisée pour 280 cm$^3$ de solution (g) | | | | |
|---|---|---|---|---|---|
| | Mo (1) | W (2) | Ni (3) | Co (4) | Fe (5) |
| A1 | 19,8 | 0,0 | 0,0 | 76,0 | 0,0 |
| A2 | 19,8 | 0,0 | 38,0 | 38,0 | 0,0 |
| A3 | 19,8 | 0,0 | 0,0 | 0,0 | 105,5 |
| A4 | 0,0 | 29,5 | 76,0 | 0,0 | 0,0 |
| A5 | 0,0 | 29,5 | 0,0 | 76,0 | 0,0 |
| A6 | 0,0 | 29,5 | 38,0 | 38,0 | 0,0 |
| A7 | 0,0 | 29,5 | 0,0 | 0,0 | 105,5 |
| A8 | 9,9 | 14,8 | 76,0 | 0,0 | 0,0 |

(1) : $(NH_4)_6Mo_7O_{24}.4H_2O$    PM=1235,86

(2) : $(NH_4)_{10}W_{12}O_{41}.5H_2O$  PM=3162,64

(3) : $Ni(NO_3)_2.6H_2O$        PM=290,80

(4) : $Co(NO_3)_2.6H_2O$        PM=291,05

(5) : $Fe(NO_3)_3.9H_2O$        PM=404,0

TABLEAU 7

| CATA-LYSEUR | X | I | H | V $10^8$ fois |
|---|---|---|---|---|
| HR 306 | 16,1 | 0,2 | 5,8 | 50 |
| HR 346 | 29,5 | 0,4 | 13,0 | 45 |
| A | 73,0 | 1,1 | 24,8 | 48 |
| A1 | 65,0 | 1,0 | 22,0 | 50 |
| A2 | 75,0 | 1,15 | 24,0 | 50 |
| A3 | 55,0 | 0,7 | 20,0 | 29 |
| A4 | 71,2 | 1,0 | 24,0 | 46 |
| A5 | 62,5 | 0,8 | 22,0 | 36 |
| A6 | 72,3 | 1,1 | 25,0 | 48 |
| A7 | 51,0 | 0,5 | 18,0 | 26 |
| A8 | 72,0 | 1,05 | 25,0 | 48 |
| A9 | 63,0 | 0,8 | 22,0 | 34 |
| A10 | 66,0 | 1,2 | 26,0 | 36 |
| A11 | 72,0 | 1,0 | 25,0 | 45 |
| A12 | 74,0 | 1,2 | 28,0 | 50 |
| A13 | 19,0 | 0,3 | 8,0 | 46 |
| A14 | 13,0 | 0,2 | 7,0 | 20 |

TABLEAU 8

EXEMPLE 5

On prépare comme à l'exemple 1 pour le catalyseur A, les catalyseurs A9, A10, A11 et A12, mais en partant respectivement de sulfate de nickel hexahydrate et de chlorure de nickel hexahydrate au lieu de nitrate de nickel hexahydrate, de dimolybdate d'ammonium et du sel d'ammonium de l'acide phosphomolybdique au lieu d'heptamolybdate d'ammonium. Les quantités de sel sont déterminées de façon à mettre en jeu à chaque fois le même nombre d'atomes de nickel et de molybdène que pour la préparation du catalyseur A. Les catalyseurs finis ont le même rapport du nombre d'atomes de nickel au nombre total d'atomes métalliques que le catalyseur A, mais A9 contient du soufre lié sous forme de sulfates, A10 contient du chlore et A12 contient du phosphore.

Les catalyseurs A9 à A12 sont évalués dans les tests catalytiques d'hydroraffinage et d'hydrodésulfuration et comparés au catalyseur A et aux catalyseurs HR 306 et HR 346 de l'art antérieur. Les résultats obtenus sont présentés au tableau 8.

On peut constater que les catalyseurs A9 et A10 sont un peu moins actifs que A, que A11 lui est équivalent et que A12 a une activité supérieure. Les catalyseurs A9 à A12 sont cependant tous plus actifs en hydroraffinage que les catalyseurs de l'art antérieur, et comparables à supérieurs en hydrodésulfuration. Ces résultats illustrent le fait que la nature du sel soluble du ou des métaux du groupe VIII n'a pas une influence très importante sur la qualité du catalyseur préparé selon la méthode de l'invention, quoique toutefois l'on préfère le nitrate de nickel. Quant au choix du sel d'ammonium de polyanion du ou des métaux du groupe VIB, on peut utiliser de préférence un sel d'un hétéropolyanion phosphoré, en particulier pour augmenter les propriétés acides du catalyseur.

EXEMPLE 6

On prépare une solution de 76 g de nitrate de cobalt hexahydrate dans 300 cm³ d'eau distillée et une solution de 19,8 g d'heptamolybdate d'ammonium à 4 molécules d'eau dans 300 cm³ d'eau distillée. Les deux solutions sont portées à 70 °C, puis mélangées. Le mélange est introduit lentement dans un ballon sous agitation vigoureuse contenant 500 cm³ de sulfure d'ammonium en solution aqueuse à 20% poids, maintenu à 70 °C. Lorsque l'introduction est terminée, on maintient le ballon sous agitation à 70 °C jusqu'à évaporation totale du liquide. Le produit sec est recueilli, chauffé depuis l'ambiante jusqu'à 400 °C en 250 mn, maintenu à 400 °C pendant 4 heures, puis refroidi jusqu'à l'ambiante, le tout sous un courant d'$H_2$ contenant 3% en volume d'$H_2S$. A l'issue de cette resulfuration, le solide est balayé par un courant d'azote, puis d'argon, puis conditionné sous argon. On recueille ainsi 40 g environ du catalyseur A13 préparé selon la méthode "HSP" originale décrite par Topsoe et coll. (déjà cité) pour préparer des sulfures mixtes de cobalt et molybdène.

On prépare dans un ballon une solution de 7,6 g de nitrate de cobalt hexahydrate et 1,98 d'heptamolybdate d'ammonium à 4 molécules d'eau dans 1 litre d'eau distillée. La solution est vigoureusement agitée et chauffée à 100 °C. On y ajoute lentement 400 cm³ d'une solution de sulfure d'ammonium à 2 % poids. Lorsque l'addition est terminée, on procède comme précédemment à une évaporation, puis à une resulfuration du résidu sec sous un courant d'hydrogène à 15 % vol. d'$H_2S$. On obtient de cette façon environ 4 g de catalyseur A14 préparé selon la variante de la méthode "HSP" décrite par Breysse et coll. (déjà cité).

Les catalyseurs A13 et A14 sont soumis aux tests d'hydroraffinage et d'hydrodésulfuration. Les résultats obtenus ont été reportés au tableau 8 et peuvent être comparés à ceux obtenus pour le catalyseur A1 préparé par la méthode selon l'invention. Les catalyseurs A1, A13 et A14 ont la même composition élémentaire. Les catalyseurs A1 et A13 ont des activités en hydrodésulfuration comparables, mais A1 est beaucoup plus actif en hydroraffinage. Le catalyseur A14 est le moins actif dans les deux tests.

On démontre par cet exemple que la méthode de préparation de l'invention, différente dans ses modalités de la méthode "HSP", conduit à des catalyseurs de composition identique très supérieurs à ceux connus antérieurement. Parmi les méthodes connues de l'art antérieur, la méthode "HSP" est pourtant la plus proche de la méthode de préparation de l'invention.

EXEMPLE 7

50 g de catalyseur A préparé comme à l'exemple 1 en incluant une étape d'extrusion pour obtenir des particules cylindriques de diamètre 0,8 mm et de longueur moyenne 5 mm, qui sont ensuite introduites à l'abri de l'air atmosphérique dans le réacteur tubulaire d'une unité pilote de type CATATEST, commercialisée par la société GEOMECANIQUE. Un tel appareil est connu pour la réalisation d'essais d'hydroraffinage catalytique de coupes pétrolières réelles, à petite échelle, mais aux conditions opératoires industrielles et en continu.

Après purge à l'azote sec, le CATATEST est pressurisé à 6 MPa sous hydrogène pur. Le débit d'hydrogène est fixé à 100 l/h (TPN), et la température des coquilles chauffantes est augmentée à raison de 10 °C par minute environ. Lorsque la température du réacteur atteint 150 °C, on alimente l'unité par une charge de gas-oil moyen, préalablement soutirée à la colonne de distillation des effluents liquides d'une unité de cokéfaction retardée. Ce gas-oil a un point initial de 160 °C et un point final de 350 °C, une teneur en soufre de 0,5 % pds environ, et une teneur en azote de 0,05 % poids environ. Il est aussi caractérisé par un indice de brome (IBr) de 20 (en g/100g) et un indice de cétane de 40, indicatifs d'un degré élevé d'insaturation des liaisons carbone-carbone. L'utilisation de ce gas-oil comme base de carburants diesel et/ou fuel domestique requiert habituellement un hydroraffinage sévère réalisant au moins 90 % de désulfuration, 75% de désazosation, 95 % de réduction de l'IBr (hydrogénation des oléfines) et augmentant l'indice de cétane à une valeur supérieure à 45. Le catalyseur HR 346 selon l'art antérieur permet de réaliser ces performances sur ce gas-oil en fixant par exemple la vitesse volumique horaire (V.V.H) à 3 litres de charge par litre de catalyseur et par heure, à la température de 360 °C et à la pression totale de 6 MPa.

Pour le présent exemple, on fixe le débit de gasoil à l'entrée du CATATEST à 500 ml/h, le débit d'hydrogène alimenté, à 200 l/h, et on augmente la température du réacteur à raison de 10 °C/mn jusqu'à 360 °C, température que l'on maintient par la suite uniforme dans tout le réacteur. Le gas-oil hydrotraité produit pendant les 24 premières heures de stabilisation est éliminé, puis les recettes liquides cumulées sont prélevées toutes les deux heures, traitées à l'oxyde de zinc finement divisé pour éliminer le sulfure d'hydrogène dissous et analysées. On agit sur le débit d'alimentation en gas-oil pour obtenir dans les recettes une teneur résiduelle en azote de 0,0120% pds: cette performance est atteinte pour un débit de 600 ml/h, soit une V.V.H. de 12. Par ailleurs, la teneur en soufre résiduelle est de 0,20 % pds, l'indice de brome est inférieur à 1, et l'indice de cétane dépasse 50.

Par comparaison au catalyseur HR 346, le catalyseur A selon l'invention permet donc d'atteindre les plus difficiles des spécifications requises pour l'utilisation de ce gas-oil en diminuant d'un facteur 4 le volume de catalyseur nécessaire, sans changer les conditions opératoires.

On a également procédé en réglant le débit de gasoil à l'entrée du CATATEST pour obtenir une teneur en soufre résiduelle de 0,05 % pds en sortie. Cette valeur a été atteinte pour un débit de 170 ml/h, soit une V.V.H.

14

**0 143 020**

de 3,4. Cependant, la téneur résiduelle en azote était de 0,0010% pds, et l'indice de cétane avait atteint la valeur de 60 environ. Selon cette procédure, l'utilisation du catalyseur selon l'invention permet un gain de 10 à 12 % en volume de catalyseur seulement par rapport au catalyseur de l'art antérieur pour réaliser 90 % de désulfuration du gas-oil, mais les autres qualités du produit raffiné sont très améliorées, au point que l'on trouverait un grand avantage dans la pratique industrielle à l'utiliser en mélange avec d'autres coupes moins raffinées pour constituer un produit rencontrant globalement les spécifications requises.

**Revendications**

1)- Procédé de préparation d'un catalyseur d'hydrotraitement comprenant principalement une association d'au moins un sulfure d'un métal du groupe VIB et au moins un sulfure d'un métal du groupe VIII, caractérisé en ce qu'il comprend les étapes suivantes:

a) mise en réaction, à pH maintenu à une valeur de 4,5 à 8, d'une solution aqueuse d'au moins un sel soluble d'au moins un métal du groupe VIII et d'au moins un sel d'ammonium de polyanion d'au moins un métal du groupe VIB, avec au moins un agent sulfurant aquosoluble, de manière à former un coprécipité de sulfures;

b) séparation du précipité obtenu des eaux-mères;

c) séchage dudit précipité; et

d) calcination du précipité séché;

ces diverses étapes étant effectuées sous atmosphère inerte.

2) Procédé selon la revendication 1, caractérisé en ce que, pendant l'étape (a), le pH est maintenu à une valeur de 5 à 7.

3) Procédé selon la revendication 1 ou 2, caractérisé en ce que le pH est régulé à 0,5 unités près.

4) Procédé selon l'une des revendications 1 à 3, caractérisé en ce que les proportions de réactifs mis en jeu pendant l'étape (a) sont telles que le rapport du nombre d'atomes de métaux du groupe VIII au nombre total d'atomes métalliques soit de 0,35 à 0,95 et le rapport du nombre d'atomes de soufre au nombre total d'atomes métalliques soit de 1,2 à 2,2.

5) Procédé selon l'une des revendications 1 à 4 caractérisé en ce que le sel soluble de métal du groupe VIII est un nitrate du cation divalent.

6) Procédé selon l'une des revendications 1 à 5, caractérisé en ce que l'agent sulfurant est une solution aqueuse de sulfure d'ammonium.

7) Procédé selon l'une des revendications 1 à 6, caractérisé en ce que le métal du groupe VIII est choisi parmi le nickel, le cobalt et le fer, et en ce que le métal du groupe VIB est choisi parmi le molybdène et le tungstène.

8) Procédé selon la revendication 7, caractérisé en ce que le métal du groupe VIII est le nickel et en ce que le métal du groupe VIB est le molybdène.

9) Procédé selon l'une quelconque des revendications 1 à 8, caractérisé en ce que l'étape (a) est effectuée à une température de 0 à 50 °C.

10) Procédé selon l'une quelconque des revendications 1 à 9, caractérisé en ce la séparation (étape b) est réalisée en continu pendant l'étape (a).

11) Procédé selon l'une des revendications 1 à 10, caractérisé en ce que l'on met en forme le précipité séparé à l'étape (b).

12) Procédé selon la revendication 11, caractérisé en ce que, au moment de la mise en forme, on incorpore au moins un oxyde non-réductible choisi parmi les alumines, les silices et les silice-alumines, un liant ou un porogène, en une proportion de 5 à 95 % en poids par rapport au poids du catalyseur fini.

13) Catalyseur comprenant principalement une association d'au moins un sulfure d'un métal du groupe VIB et au moins un sulfure d'un métal du groupe VIII, caractérisé en ce que lesdits sulfures correspondent à une stoéchiométrie de 1,2 à 2,2 atomes de soufre par atome de métal, un rapport du nombre d'atomes de métaux du groupe VIII au nombre total d'atomes métalliques de 0,35 à 0,95 et à la structure cristallographique de la molybdénite pour le sulfure de métal du groupe VIB et à celle de la pyrite pour le sulfure de métal du groupe VIII, ladite association présentant un diagramme de diffraction sur poudre du rayonnement X à la longueur d'onde de la raie $K_{alpha}$ du cuivre comportant au moins les deux raies principales caractéristiques du ou des disulfures de métaux du groupe VIB, le sommet de la raie notée (002) en indices de MILLER étant située à un angle de BRAGG de 7,0 à 7,30 degrés et sa largeur angulaire à mi-hauteur étant de 0,5 à 1,5 degrés, comportant également au moins les deux raies principales du disulfure de chacun des métaux du groupe VIII mis en jeu, la largeur angulaire à mi-hauteur de la raie la plus intense notée (200) en indices de MILLER du disulfure de métal du groupe VIII majoritaire étant de 0,05 à 1 degré, l'intensité diffractée au sommet de cette raie étant supérieure à celle diffractée au sommet de la raie (002) du disulfure majoritaire de métal du groupe VIB, ce diagramme de diffraction étant tel que, si les raies caractéristiques d'un monosulfure de métal du groupe VIII se manifestent, la hauteur de la raie principale (100) est inférieure à 5 fois celle de la raie principale (200) du disulfure du même métal, et tel que, si les raies caractéristiques du dioxyde du métal du groupe VIB majoritaire se manifestent, la hauteur de la raie principale (110) de ce dioxyde soit inférieure à 0,5 fois celle de la raie principale (002) du disulfure du même métal.

14) Catalyseur selon la revendication 13 caractérisé en ce que le spectre de diffraction sur poudre du rayonnement X comporte au moins les quatres raies principales caractéristiques du ou des disulfures de

15

métaux du groupe VIB et au moins les sept raies principales du disulfure de chacun des métaux du groupe VIII mis en jeu.

15) Catalyseur selon la revendication 13 ou 14 caractérisé en ce que le métal du groupe VIII est le nickel et en ce que le métal du groupe VIB est le molybdène.

16) Catalyseur selon l'une des revendications 13 à 15 caractérisé en ce qu'il présente une surface spécifique, mesurée par sorptométrie à l'azote, de 10 à 200 m²/g.

17) Utilisation d'un catalyseur préparé selon l'une des revendications 1 à 12 ou défini selon l'une des revendications 13 à 16 dans une réaction d'hydroraffinage d'une charge d'hydrocarbures contenant du soufre.

18) Utilisation selon la revendication 17 dans laquelle le catalyseur est en mélange avec au moins un oxyde non réductible choisi parmis les alumines, les silice-alumines, un liant ou un porogène en une proportion de 5 à 95% en poids par rapport au poids du catalyseur fini.

## Patentansprüche

1. Verfahren zur Herstellung eines Katalysators für die hydrierende Umwandlung, enthaltend hauptsächlich eine Vereinigung von zumindest einem Sulfid eines Metalls der Gruppe VIB und zumindest einem Sulfid eines Metalls der Gruppe VIII, dadurch gekennzeichnet, daß es die folgenden Stufen umfaßt:

a) Umsetzung einer wässrigen Lösung von zumindest einem wasserlöslichen Salz zumindest eines Metalls der Gruppe VIII und zumindest einem Ammoniumsalz des Polyanions von zumindest einem Metall der Gruppe VIB mit zumindest einem wasserlöslichen, schwefelnden Mittel bei einem pH, der auf einem Wert von 4,5 bis 8 gehalten wird in einer Weise, dan sich ein Kopräzipitat von Sulfiden bildet,

b) Abtrennung des erhaltenen Niederschlages von den Mutterlaugen,

c) Trocknung des Niederschlages, und

d) Kalzinierung des getrockneten Niederschlages, wobei diese verschiedenen Stufen unter inerter Atmosphäre durchgeführt werden.

2. Verfahren nach Anspruch 1, dadurch gekennzeichnet, daß man während der Stufe (a) das pH auf einem Wert von 5 bis 7 hält.

3. Verfahren nach Anspruch 1 oder 2, dadurch gekennzeichnet, daß das pH auf etwa 0,5 Einheiten eingestellt wird.

4. Verfahren nach einem der Ansprüche 1 bis 3, dadurch gekennzeichnet, daß die Mengenanteile der in der Stufe (a) eingesetzten Reaktionspartner so sind, daß das Verhältnis der Zahl der Metallatome der Gruppe VIII zur Gesamtzahl der Metallatome 0,35 bis 0,95 beträgt und das Verhältnis der Zahl der Atome an Schwefel zur Gesamtzahl der Metallatome 1,2 bis 2,2 beträgt.

5. Verfahren nach einem der Ansprüche 1 bis 4, dadurch gekennzeichnet, daß das lösliche Salz des Metalls der Gruppe VIII ein Nitrat des zweiwertigen Kations ist.

6. Verfahren nach einem der Ansprüche 1 bis 5, dadurch gekennzeichnet, daß das Schwefelungsmittel eine wässrige Lösung von Ammoniumsulfid ist.

7. Verfahren nach einem der Ansprüche 1 bis 6, dadurch gekennzeichnet, daß das Metall der Gruppe VIII Nickel, Kobalt oder Eisen ist und daß das Metall der Gruppe VIB Molybdän oder Wolfram ist.

8. Verfahren nach Anspruch 7, dadurch gekennzeichnet, daß das Metall der Gruppe VIII Nickel und das Metall der Gruppe VIB Molybdän ist.

9. Verfahren nach einem oder mehreren der Ansprüche 1 bis 8, dadurch gekennzeichnet, daß die Stufe (a) bei einer Temperatur von 0 bis 50°C durchgeführt wird.

10. Verfahren nach einem oder mehreren der Ansprüche 1 bis 9, dadurch gekennzeichnet, daß die Abtrennung (Stufe b) kontinuierlich während der Stufe (a) durchgeführt wird.

11. Verfahren nach einem der Ansprüche 1 bis 10, dadurch gekennzeichnet, daß man den in der Stufe (b) abgetrennten Niederschlag formt.

12. Verfahren nach Anspruch 11, dadurch gekennzeichnet, daß man beim Formen zumindest ein nicht reduzierbares Oxid aus der Gruppe Aluminiumoxide, Siliciumdioxide und Silicium-Aluminiumoxide, ein Bindemittel oder ein Porenbildnermittel in einem Mengenanteil von 5 bis 95 Gew.-%, bezogen auf das Gewicht des fertigen Katalysators, einbringt.

13. Katalysator, enthaltend hauptsächlich eine Vereinigung von zumindest einem Sulfid eines Metalls der Gruppe VIB und zumindest einem Sulfid eines Metalls der Gruppe VIII, dadurch gekennzeichnet, daß diese Sulfide einer Stöchiometrie von 1,2 bis 2,2 Schwefelatomen pro Atom Metall, einem Verhältnis der Anzahl der Metallatome der Gruppe VIII zur Gesamtzahl der Metallatome von 0,35 bis 0,95 und der kristallographischen Struktur des Molybdänits für das Sulfid des Metalls der Gruppe VIB und derjenigendes Pyrits für das Sulfid des Metalls der Gruppe VIII entsprechen, und daß diese Vereinigung ein Röntgenbeugungsdiagramm (Pulvermethode) bei der Wellenlänge der Kupfer $K_{alpha}$ Strahlung liefert, das zumindest die zwei charakteristischen Hauptlinien des Disulfids oder der Disulfide der Metalle der Gruppe VIB zeigt, wobei das Maximum der beobachteten Linien (002) in MILLER Indices im Bragg'schen Streu-Winkel von 7,0 bis 7,30 Grad liegt und seine Winkelgröße bei der Halbwertsbreite der Linie 0,5 bis 1,5 Grad beträgt und auch zumindest die zwei Hauptlinien des Disulfids jedes der eingesetzten Metalle der Gruppe VIII aufweist, wobei die Winkelgröße bei der Halbwertsbreite der intensivsten beobachteten Linien (200) in MILLER Indices des Disulfids des überwiegenden Metalls der Gruppe VIII 0,05 bis 1 Grad betragen und die Beugungsintensität beim Maximum dieser Linie größer ist wie diejenige der Beugung beim Maximum der Linie (002) des hauptsächlichen Disulfids des Metalls der Gruppe VIB und dieses Beugungsdiagramm so ist, daß wenn die ccharakteristischen Linien eines Monosulfids des Metalls der Gruppe VIII sich zeigen die Höhe der Hauptlinie (100) fünfmal geringer ist wie diejenige der Hauptlinie (200) des Disulfids des gleichen Metalls und derart, daß wenn die charakteristischen Linien des Dioxids des hauptsächlichen Metalls der Gruppe VIB sich zeigen, die Höhe der Hauptlinie (110) dieses Dioxids 0,5 mal kleiner ist als die Hauptlinie (002) des Disulfids des gleichen Metalls.

14. Katalysator nach Anspruch 13, dadurch gekennzeichnet, daß das Röntgenbeugungsspektrum (Pulvermethode) zumindest die vier charakteristischen Hauptlinien des Disulfids oder derer Disulfide der Metalle der Gruppe VIB und zumindest die sieben Hauptlinien des Disulfids jedes der eingesetzten Metalle der Gruppe VIII zeigt.

15. Katalysator nach Anspruch 13 oder 14, dadurch gekennzeichnet, daß das Metall der Gruppe VIII Nickel und das Metall der Gruppe VIB Molybdän ist.

16. Katalysator nach einem der Ansprüche 13 bis 15, dadurch gekennzeichnet, daß er eine spezifische Oberfläche, gemessen durch Stickstoffabsorption, von 10 bis 200 m2/g aufweist.

17. Verwendung eines nach einem der Ansprüche 1 bis 12 hergestellten oder nach einem der Ansprüche 13 bis 16 definierten Katalysators in einer Hydroraffinationsreaktion einer Kohlenwasserstoffcharge, die Schwefel enthält.

18. Verwendung nach Anspruch 17, wobei der Katalysator in Mischung mit zumindest einem nicht reduzierbaren Oxid aus der Gruppe Aluminiumoxide, Silicium-Aluminiumoxid, einem Bindemittel oder einem Porenbildner in einer Menge von 5 bis 95 Gew.-%, bezogen auf das Gewicht des fertigen Katalysators, vorliegt.

## Claims

1. A process for preparing a hydrotreatment catalyst comprising mainly an association of at least one group VI B metal sulfide and at least one group VIII metal sulfide characterized in that it comprises the following steps:

a) reacting, at a pH maintained at a value of 4,5 to 8, an aqueous solution of at least one soluble salt of at least one group VIII metal and at least one ammonium salt of a polyanion of at least one group VI B metal, with at least one water-soluble sulfiding agent, under conditions which form a coprecipitate of sulfides;

b) separating the resultant precipitate from the mother liquors;

c) drying said precipitate; and

d) calcining the dried precipitate;

these various steps being effected under an inert atmosphere.

2. A process according to claim 1, characterized in that, during step (a) the pH is maintained at a value of from 5 to 7.

3. A process according to claims 1 or 2, characterized in that the pH is regulated to ± 0,5 units.

4. A process according to one of claims 1 to 3, characterized in that the proportions of reactants used in step (a) are such that the ratio of the number of atoms of the group VIII metal to the total number of metal atoms is from 0,35 to 0 95, and the ratio of the number of sulfur atoms to the total number of metal atoms is from 1,2 to 2,2.

5. A process according to one of claims 1 to 4, characterized in that the soluble group VIII metal salt is a nitrate of a divalent cation.

6. A process according to one of claims 1 to 5, characterized in that the sulfiding agent is an aqueous ammonium sulfide solution.

7. A process according to one of claims 1 to 6, characterized in that the group VIII metal is selected from nickel, cobalt and iron, and the group VI B metal is selected from molybdenum and tungsten.

8. A process according to claim 7, characterized in that the group VIII metal is nickel and the group VI B metal is molybdenum.

9. A process according to any one of claims 1 to 8, characterized in that step (a) is effected at a temperature of from 0 to 50°C.

10. A process according to any one of claims 1 to 9, characterized in that the separation in step (b) is effected continuously during step (a).

11. A process according to one of claims 1 to 10 characterized in that the precipitate separated in step (b) is shaped.

12. A process according to claim 11, characterized in that, in the course of shaping, at least one non-reducible oxide selected from the aluminas, the silicas, and the silica-aluminas, a binder or a porogen is incorporated, in a proportion of from 5 to 95% by weight with respect to the weight of the finished catalyst.

13. A catalyst comprising mainly an association of at least one sulfide of a group VI B metal and at least one sulfide of a group VIII metal, characterized in that said sulfides are present in a stoichiometry of from 1,2 to 2,2 atoms of sulfur per atom of metal, a ratio of the number of atoms of group VIII metal to the total number of metal atoms of from 0,35 to 0,95, and having a crystallographic structure of molybdenite for the group VI B metal sulfide and of pyrite for the group VIII metal sulfide, said association exhibiting an X-ray powder diffraction diagram at the wave length of the copper $K_{alpha}$ peak having at least two principle peaks characteristic of the group VI B metal(s) disulfide(s) the height of the peak denoted (002) in the Miller indices being situated at a Bragg angle of from 7,0 to 7,30 degrees and its angular width at half-height being from 0,5 to 1,5 degrees, the diffraction diagram also having at least the two principle peaks of the disulfide of each of the group VIII metals used, the angular width at half-height of the most intense peak denoted (200) in the Miller indices of the major group VIII metal disulfide being from 0,05 to 1 degree, the diffracted intensity at the top of this peak being higher than the diffracted intensity at the height of the (002) peak of the major group VI B metal disulfide, the diffraction diagram being such that, when peaks characteristic of a group VIII metal monosulfide are present, the height of the principle peak (100) is less than 5 times that of the principle peak (200) of the disulfide of the same metal, and such that, when peaks characteristic of the dioxide of the major group VI B metal appear, the height of the principle peak (110) of this dioxide is less than 0,5 times that of the principle peak (002) of the disulfide of the same metal.

14. A catalyst according to claim 13, characterized in that the X-ray powder diffraction spectrum exhibits at least the four principle peaks characteristic of the disulfide(s) of the group VI B metal(s) and at least the seven principle peaks of the disulfide of each of the group VIII metals used.

15. A catalyst according to claim 13 or 14, characterized in that the group VIII metal is nickel and the group VI B metal is molybdenum.

16. A catalyst according to one of claims 13 to 15, characterized in that said catalyst has a specific surface, measured by nitrogen sorptometry, of from 10 to 200 m2/g.

17. The use of a catalyst prepared according to one of claims 1 to 12, or characterized according to one of claims 13 to 16, in a hydrorefining reaction of a hydrocarbon charge containing sulfur.

18. The use according to claim 17 in which the catalyst is mixed with at least one non-reducible oxide selected from aluminas, silica-aluminas, a binder or a porogen, in a proportion of from 5 to 95% by weight with respect to the weight of the finished catalyst.

0 143 020

FIG.1

FIG.2

FIG.3

FIG.4

FIG.5

FIG.6

FIG.7

3

FIG.8

FIG.9

**FIG.10**

**FIG.11**